# EUROPÄISCHE PATENTSCHRIFT

(11) **EP 2 097 302 B1**
(45) Veröffentlichungstag und Bekanntmachung des Hinweises auf die Patenterteilung: **26.05.2010**
(21) Anmeldenummer: 07856734.4
(22) Anmeldetag: 14.12.2007
(51) Int. Cl.: B60T 11/18, B60T 17/04, B60T 17/22

(54) **ADAPTIVE LEERWEGREDUZIERUNG**
ADAPTIVE FREE-TRAVEL REDUCTION
RÉDUCTION ADAPTATIVE DE COURSE À VIDE

(30) Priorität: 15.12.2006 DE 102006059840
(43) Veröffentlichungstag der Anmeldung: 09.09.2009
(73) Patentinhaber: IPGATE AG, 8044 Zürich (CH)
(72) Erfinder: LEIBER, Heinz, 71739 Oberriexingen (DE)
(74) Vertreter: Lenzing Gerber Stute
(86) Internationale Anmeldenummer: PCT/EP2007/010993
(87) Internationale Veröffentlichungsnummer: WO 2008/071437

(56) Entgegenhaltungen:
- EP-A- 1 498 332
- DE-A1- 2 062 533
- DE-C1- 19 543 698
- GB-A- 914 157

## Beschreibung

Die vorliegende Erfindung betrifft eine Bremsanlage nach dem Oberbegriff des Anspruch 1.

Bekannt sind konventionelle Bremskraftverstärker (BKV) als sog. Folgeverstärker, bei denen der Pedalweg proportional zum Kolbenweg des Hauptbremszylinders ist. Daneben gibt es zu nehmend Systeme mit sog. Wegsimulator bei denen die o. g. Zuordnung nicht mehr gilt. Ein solches System ist als sog. "Elektrohydraulische Bremse (EHB)" im Bremsenhandbuch 2. Auflage, Vieweg Verlag, S. 251 und 252, beschrieben, welches noch nicht in allen Funktionen optimiert ist.

Für die verschiedenen Funktionen der Bremsanlage benötigen die Wegsimulationssysteme einen Leerweg zwischen Pedalstößel und BKV-Stößel bzw. Kolben. Dies ist in der WO 2004/005095 A1 beschrieben. Hier wird ein Mittel vorgeschlagen, welches bei Ausfall des Bremskraftverstärkers BKV den Leerweg reduziert. Dieses Mittel wirkt nicht, wenn der BKV-Ausfall bei der Bremsung auftritt, da hier das Mittel nicht in den kleineren Leerwegspalt eingebracht werden kann. Extrem kritisch ist der Fall bei voller Aussteuerung des Wegsimulators und damit Leerweg gegen 0 und BKV-Ausfall, noch extremer zusätzlich Bremskreisausfall. Hier kann der Normalfahrer durch zu große Pedalwege oder zu geringem Bremsdruck keine ausreichende Bremswirkung erzeugen, da die ergonomische Grenze ca. 60 % Pedalhub beträgt. D. h. dass ein Mittel, welches erst bei Vollaussteuerung des Wegsimulators einsetzt, keine ausreichende Wirkung hat.

In der DE 10 2005 018 649.1 ist ein fortschrittlicheres Wegsimulatorsystem beschrieben, welches keine "Mittel" zur Leerwegreduzierung aufweist, ohne dass dabei die ABS-Funktion auf des Pedal zurückwirkt. In der DE 10 2005 059 609.6 ist ein System mit Leerhub beschrieben, der nur wirksam bei der ABS-Funktion ist. Hierzu muss ein Vergleich des Wegsimulatorweges mit der Kolbenstellung durchgeführt werden. Bei kleinem Abstand wird dann der Leerweg eingeschaltet. Fällt während einer normalen Bremsung der Bremskraftverstärker BKV aus, so wirkt sich kein Leerweg negativ aus. Im Extremfall, also bei Ausfall des Bremskraftverstärkers auf Eis sind ohnehin nur kleine Blockiereindrücke, d. h. Pedalwege erforderlich, so dass sich in diesem Fall ein kleinerer effektiver Kolbenweg nicht nachteilig auswirkt. Dieses System weist nur eine Raststellung auf.

### Aufgabe

Aufgabe der Erfindung ist ein System, aufbauend auf DE 10 2005 059 609.6 bereitzustellen, bei dem keine Pedalrückwirkung bei ABS-Betrieb entsteht und welches zugleich einen geringen Leerhub bei Ausfall des Motors oder der elektrischen Energieversorgung hat, sowie kleine Abmessungen aufweist.

Diese Aufgabe wird erfindungsgemäß mit einer Bremsanlage mit den Merkmalen des Anspruch 1 gelöst. Weitere vorteilhafte Ausgestaltungen der Bremsanlage nach Anspruch 1 ergeben sich durch die Merkmale der Unteransprüche.

Grundgedanke der Erfindung ist es, ein Koppelelement zwischen Pedalstößel und BKV-Stößel einzusetzen, welches im Normalfall entrastet ist. In kritischen Situationen, wie z.B. bei Ausfall des Bremskraftverstärkers (BKV) kann das Koppelelement stufenlos oder in einer bzw. mehreren Stellungen arretiert werden. Dieses Koppelement mit Rastelement kann vorzugsweise elektromechanisch, aber auch piezo-elektrisch oder elektrohydraulisch betätigbar ausgeführt werden. Weitere Wirkprinzipien sind denkbar. So kann die Arretierung zudem über Führungskurven realisiert sein. Bei der elektromechanischen Ausführung ist das Koppelelement mittels eines Rastelementes mit einer Verzahnung des Pedalstößels verrastbar, wobei je nach der relativen Stellung des Koppelelements zum Pedalstößel ein verschieden großer Leerweg vorhanden ist. Erfolgt die Einrastung in der vorderen Endlage des Koppelelements zum Pedalstößel, so ist kein Leerweg vorhanden. Ist der Hub des Pedalstößels größer als der Kolbenhub, z. B. bei ABS-Funktion und bei kleineren Drücken, so wird das Koppelement so weit wie die Kolbenstellung es erlaubt, zurückbewegt. Fällt nun bei der normalen Bremsung der BKV aus, so entsteht kein Leerweg, da das Koppelglied verrastet ist. Bei ABS-Betrieb wird bei Ausfall BKV in der entsprechenden bzw. momentanen Kolbestellung eingerastet. Somit erfolgt vorteilhaft eine adaptive Leerweganpassung.

Zur Einrastung wird ein Hubmagnet geschaltet, der das Rastelement in die oder aus der Rastung bewegt. Anstelle der Rastung ist auch eine aufwändige stufenlose Lösung mit Keilwirkung mit Selbsthemmung denkbar.

Die Schaltung des Hubmagneten kann verschieden ausgeführt sein. So kann der Hubmagnet z. B. während der Normalbremsung nicht bestromt werden, d. h. das Rastelement ist nicht eingerastet. Ebenso ist es möglich, den Hubmagneten während der Normalbremsung zu bestromen. In jedem Fall ist sichergestellt, dass bei Ausfall BKV oder Stromversorgung die Rückfallebene fail-safe ist. Vorteilhaft ist zudem, wenn mittels eines Sensors die Rastung diagnostizierbar ist, z. B. mittels eines Schaltersignals eines Schalters.

In einer weiteren Ausgestaltung kann der Entrasthub zur Betätigung eines Anschlages für das Pedalstößel verwendet werden, um zu verhindern, dass der Wegsimulator bei ABS-Funktion und kleinen Drücken, d.h. wenig Pedalhub, zu stark ausgesteuert wird. Dies hat den Vorteil, dass bei einem unwahrscheinlichen Doppelfehler Ausfall des Bremskraftverstärkers bei gleichzeitigem Bremskreisausfall und gleichzeitiger ABS-Regelung genügend Pedalhub zur Verfügung steht, um genügend Bremswirkung zu erreichen.

Im Stand der Technik ist der Wegsimulator getrennt oder achsparallel angeordnet. Gemäß der Erfindung kann der Wegsimulator jedoch auch koaxial zum Bremskraftverstärker und Kolben-Zylinder-System (H2-Kolben) angeordnet werden, wobei dann vorteilhaft die Verrastung an einem Teil des Wegsimulators erfolgt, welches mit dem Pedalstößel in Verbindung ist. Ebenso kann das Pedalstößel als Teil des Wegsimulators ausgebildet sein. Vorteilhaft kann dabei die Rastung innerhalb des Wegsimulators vorgesehen sein. Dies hat erhebliche Kosten- und Gewichtsvorteile.

Der Schaltmagnet kann vorteilhaft am Wegsimulatorgehäuse befestigt sein und bewegt sich nicht während der Bremsung, daher muss eine Verkabelung nicht den Pedalhub durchlaufen, sondern kann in dieser Stellung kontaktiert werden. Mit diesem Konzept sind alle nachfolgenden Vorteile umsetzbar:
- Optimale Pedalcharakteristik d. h. bei 30 - 40 % Pedalweg ist Blockierdruck erreicht und bei 40 - 50 % ist doppelter Blockierdruck für z. B. Fading erreicht mit geringen Fußkräften (der konv. Verstärker benötigt hohe Fußkräfte, da der Aussteuerpunkt bei Blockierdruck ohne Fading liegt. Eine Verdopplung des Aussteuerpunktes würde bei Vakuum-BKV zu sehr großen Dimensionen führen. Mit ESP-Systemen wird bei geringeren Fußkräften durch Aufpumpen das hohe Druckniveau erreicht, allerdings mit zeitlicher Verzögerung beschränkt durch die Leistung der Pumpe. Dies führt zur Bremswegverlängerung.
- kein Pedaldurchfall bei Bremskreisausfall;
- bei Fading bei derselben Fußkraft kann der Druck angepasst werden, indem z. B. die Fahrzeugverzögerung berücksichtigt wird;
- bei ABS-Funktionen kein pulsierendes Pedal;
- bei Fahrzeugen mit Rekuperation wird ähnlich Fading der Druck dem Bremsmoment des Generators angepasst;
- bei Auswertung des Pedalweges und des Kolbenweges erfolgt automatisch eine Diagnose des Bremskreises auf Entlüftung und Dichtheit;
- durch die Entkopplung vom Pedalweg können Kolben mit kleinem Durchmesser verwendet werden, was erheblich kleinere Fußkräfte bei BKV-Ausfall ermöglicht, dem sog. Übersetzungssprung;
- bei einem Unfall, insbesondere bei einer Bremsung auf Eis, ist beim konventionellen System der Pedalweg klein, und die Crash-Kräfte wirken voll auf den Fuß. Beim Wegsimulationssystem steht ein größerer Pedalweg bis zur Arretierung zur Verfügung. Zusätzlich kann entsprechend DE 102005 059 609.6 (E91) die Arretierung abgeschaltet werden, so dass ein noch größerer Pedalweg zur Verfügung steht;
- extrem fehlersicher.

Nachfolgend werden verschiedene mögliche Ausgestaltungen der erfindungsgemäßen Bremsanlage anhand von Zeichnungen näher erläutert.

Es zeigen:
- Fig. 1 :: Den Grundaufbau mit stromloser Einrastung während der normalen Bremsung;
- Fig. 2:: den Grundaufbau mit bestromtem Schaltelement während der Bremsung;
- Fig. 3:: die Pedalcharakteristik;
- Fig. 4:: die Schaltstellung entsprechend Konzept aus Fig. 1 bei ausgesteuertem Wegsimulator, d. h. Vollbremsung;
- Fig.: 4a:die Schaltstellung entsprechend Konzept aus Fig. 1 bei ausgesteuertem Wegsimulator bei ABS-Funktion;
- Fig. 5:: Verkürzung des Wegsimulatorhubes durch Anschlagele- ment.

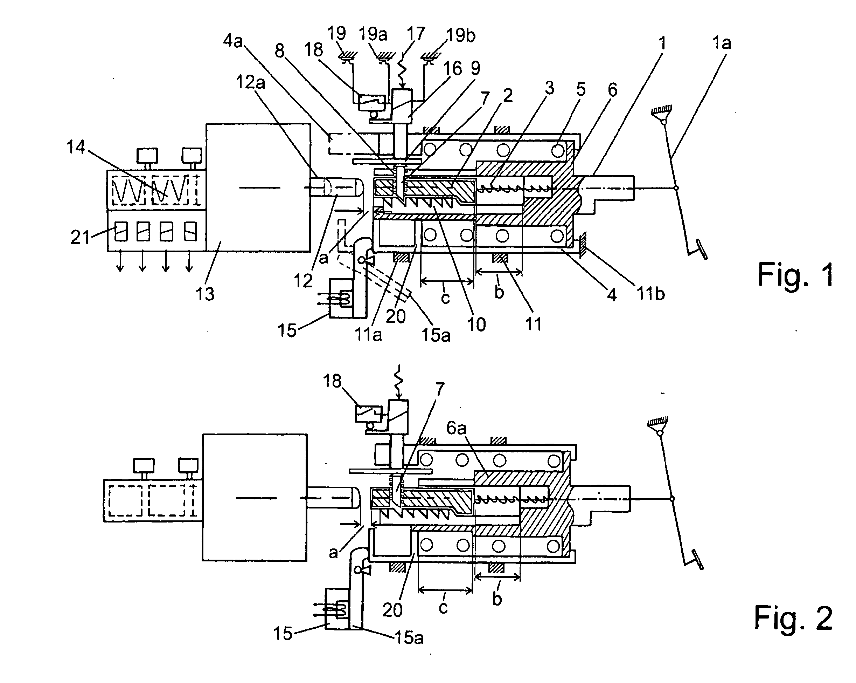

Die Fig. 1 zeigt den Grundaufbau einer ersten möglichen Ausgestaltung der erfindungsgemäßen Bremsanlage. Der Pedalstößel 1 überträgt die Kraft des Pedals 1a über Rastung 10 und Rastelement 7 auf das Koppelglied 2 zum Bremskraftverstärker-Stößel 12. Der BKV kann hydraulisch, pneumatisch oder mit elektromotorischen Aktuatoren aufgebaut sein. Mit dem Pedalstößel 1 ist ein Flansch 6 verbunden, der auf die Wegsimulatorfeder 5 wirkt, welche die bekannte Pedalkraftcharakteristik über mehrere nicht ausgeführte Federelemente erzeugt. Diese Feder 5 ist in dem Wegsimulatorgehäuse 4 untergebracht und stützt sich im Boden 20 des Wegsimulatorgehäuses ab. Bei funktionsfähigem BKV wird das Gehäuse 4 von einem Hebel des Magneten 15 arretiert. Diese Funktion ist in der DE 100 2005 018 649.1 beschrieben. Das Wegsimulatorgehäuse ist in den Lagerungen 11 und 11a geführt.

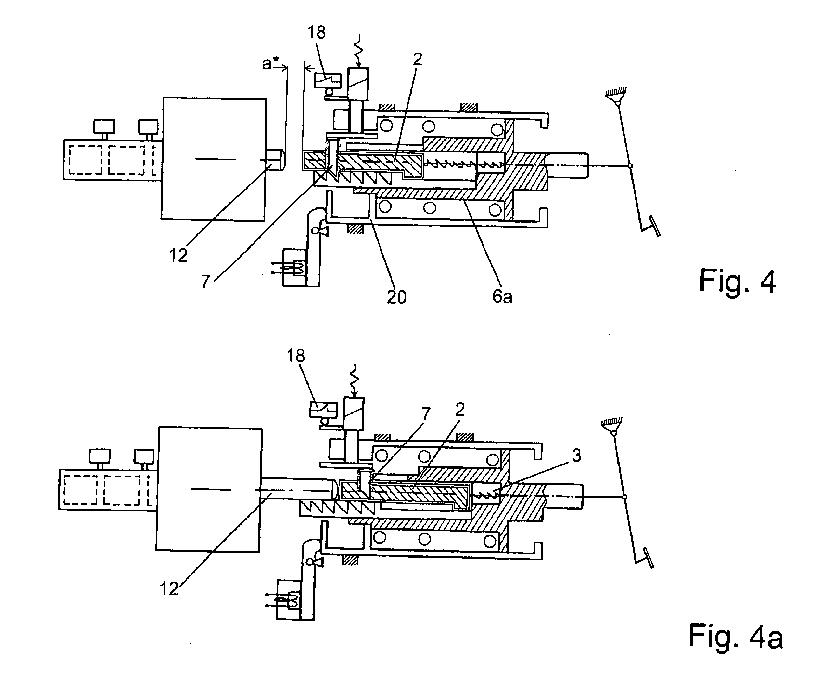

Der BKV 13 wird in der bekannten Weise von dem nicht gezeigten Pedalsensor angesteuert. Die Kraft des BKV 13 wird auf die Hauptbremszylinderkolben übertragen. Im dargestellten Fall handelt es sich um einen Tandemhauptzylinder. Das Rastelement 7 kann bei Bedarf durch eine Rückstellfeder 8 aus der Rastung heraus bewegt werden (s. zudem Fig. 4a), wenn die Magnetkraft des Hubmagneten 16 größer als die starke Magnetrückstellfeder 17 ist. Die Kraft wird vorzugsweise über eine drehbare Wippe bzw. Teller 9 übertragen deren Lagerung nicht ausgeführt ist. Diese ist notwendig, da die Stellung des Rastelementes abhängig von der Position des Koppelementes ist, wie in der Fig. 4 und 4a gezeigt werden wird. Bei der dargestellten Ausführungsform ist der Hubmagnet 16 bei der Bremsung stromlos. Der Hubmagnet 16 ist in oder an dem Wegsimulatorgehäuse 4 gelagert und bewegt sich nur mit dem Gehäuse 4 wenn der BKV ausfällt. Dadurch ist der elektrische Anschluss einfach zu gestalten, da nur in dieser Stellung Strom übertragen werden muss.

Neben dem Hubmagneten 16 ist ein Positionsschalter 18 vorhanden, der z.B. bei eingerasteter Stellung geschlossen ist. Damit können für die Sicherheit wichtige Funktionen diagnostiziert werden, z. B. zu Beginn der Fahrt. Hierbei werden sowohl die Funktion des Rastelementes als auch des Hubmagneten mit Rückstellfeder und des Schalters und der Kontaktierung überprüft. Bei Ansteuerung des Magneten 16 muss der Schalter das Aus-Signal liefern. Bei Ausfall des BKV ist der Arretiermagnet 15 nicht wirksam, so dass das Gehäuse 4 des Wegsimulators nach links in Richtung des BKV-Stößels 12 bewegt werden kann. Hierdurch kann die Pedalkraft vom Pedalstößel 1 über die Rastung 7, 10, direkt über den BKV-Stößel 12 auf die Kolben des BKV übertragen werden, so dass abhängig von der Fußkraft ein entsprechender Weg des BKV-Stößels und auch Kolbenweg mit entsprechendem Bremsdruck zustande kommt. Diese Stellung ist strichpunktiert gezeichnet und mit 4a, 12a, 15a beschrieben.

Die Funktion der Ein- und Ausrastung über den Schaltmagneten wird in den folgende Figuren beschrieben. Das beschriebene Koppelelement kann auch piezo-elektrisch, elektrohydraulisch oder nach ähnlichem Wirkprinzip ausgeführt sein.
Das Wegsimulatorgehäuse 4 hat mit 11b einen Anschlag. Die Rückstellkräfte sind nicht gezeichnet. Es kann z.B. das Bremspedal mit seiner nicht gezeichneten Rückstellfeder verwendet werden..

Die Fig. 2 zeigt die Grundfunktion mit einer geänderten Ansteuerung des Schaltmagneten 16. Hier wird er gleich zu Beginn der Bremsung bestromt., d. h. das Rastelement rastet aus. Die Funktion wird über das Aus-Signal des Schalters 18 dem nicht gezeichneten el. Steuergerät gemeldet. Bei Ausfall des BKV wird der Schaltmagnet 16 ausgeschaltet, was zur Einrastung führt. In der Figur 2 sind noch die Wege b und c eingezeichnet. Mit b ist dabei der Weg des Koppelgliedes bezeichnet, der benötigt wird, damit bei ABS-Regelung (s. Fig. 4a) keine Rückwirkung auf des Pedal erfolgt. Mit c ist der Gesamtweg des Wegsimulators bezeichnet, den die Flanschbuchse 6a bis zum Boden 20 des Wegsimulatorgehäuses durchfahren kann. Es wird hierbei auf die Beschreibung zu Fig. 4 verwiesen. Die Wegstrecke b muss mindestens gleich groß der Wegstrecke c sein.

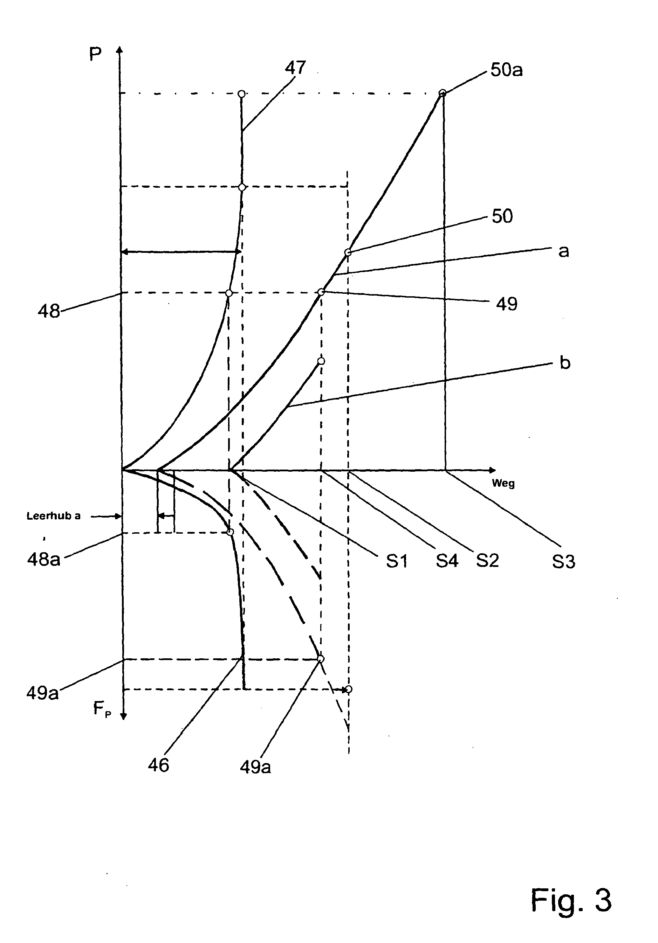

Die Fig. 3 zeigt verschiedene Kennlinien, welche die Pedalkraft und Verstärkercharakteristik beschreiben. Die Kennlinien können nicht zusammenhängend betrachtet werden, da eigentlich verschiedene Diagramme übereinander dargestellt sind. Die Kennlinien werden nachfolgend dennoch zusammengehörend beschrieben.

Kennlinie 46 zeigt die Pedalkraft in Funktion des Pedalwegs. Kennlinie 47 zeigt den Bremsdruck in Funktion der Pedalkraft. Arbeitspunkt 48a zeigt die Pedalkraft um den Blockierdruck 48 auf trockener Straße. Bei einem Weg s erfolgt die Begrenzung des Pedalweges durch den Anschlag bzw. die Arretierung des Wegsimulators. Diese Kurven gelten für intakte Verstärkung, d. h. Elektromotor und Energieversorgung. Kurve a zeigt den Kolbenweg als Funktion des Bremsdrucks. Dieser wirkt erst nach dem kleinen Leerhub a. Bei S₁ ist der Wegsimulator voll ausgesteuert und wird hier auch arretiert. Diese Kennlinie gilt auch als Druckvolumenkennlinie bei geg. Kolbenfläche. Sie ist von Bedeutung für die beschriebene Funktion des Elektromotors zur variablen pedalkraftabhängigen Druckverstärkung. Beim Weg S₂ wird der Pedalhub begrenzt, wenn die Arretierung des Wegsimulators ausgeschaltet ist. S₃ wird erreicht durch die beschriebene Entkopplung von Pedal- und Kolbenweg. Bei Ausfall der Energieversorgung wird z. B. der Blockierdruck 49 bei einem höheren Pedalweg S₄ und sehr hoher Pedalkraft 49a erreicht. Der maximale Druck, der jedoch sehr hohe Pedalkräfte erfordert, wird bei 50 erreicht. In der Regel wird auch entsprechend den gesetzlichen Vorschriften mit den Fuß- oder Pedalkräften bei weitem nicht die Blockiergrenze erreicht. Für den Normalfall intakter Verstärkung müssen jedoch höhere Drücke z. B. für Fading möglich sein. Dies wird erreicht indem der Kolbenweg erst bei S₃ begrenzt wird und ein hohes Druckniveau 50a erreicht. Dies zeigt deutlich die Vorteile der Entkopplung von Pedalhub und Kolbenhub, was den sog. Übersetzungssprung beinhaltet. Normalerweise steigen die Pedalkräfte für den entsprechenden Druck um den Faktor 5 an, was der Fahrer durch ein hartes Pedal spürt und ihn irritiert und nicht selten zu Unfällen führt. Dagegen kann durch den Übersetzungssprung der Faktor auf 2,5 reduziert werden. Wie bereits beschrieben, kann das Rastelement elektromagnetisch arretiert bzw. freigegeben werden. Wodurch der Leerhub vergrößerbar ist. Tritt nun der Fall ein, dass bei Regelung auf kleine µ die Energieversorgung ausfällt, so kann bis S₂ entsprechend der Kennlinie noch genügend Druck aufgebaut werden.

Im Gegensatz zu diesem Fall wird bei der normalen Bremsung die Entrastung nicht notwendig, das der Kolbenweg entsprechend Kurve a immer größer ist als der Wegsimulatorweg, der bei S₁ begrenzt ist. Daher steht hier bei Ausfall BKV in jedem Fall der volle Kolbenweg abzüglich des kl. Leerhubes a zur Verfügung. Dieser ist notwendig bei schneller Pedalbetätigung, um ein Auftreffen des Koppelelementes auf den BKV-Stößel zu vermeiden. Dieser Leerweg kann bei dem Konzept entsprechend Fig. 2 kleiner gewählt werden, da die Entrastzeit kleiner als der Motoranlauf ist.

Die Fig. 4 zeigt die Stellung bei Vollbremsung mit Konzept entsprechend Fig. 1. Bei voller Aussteuerung ist der Leerweg a entsprechend dem Arbeitspunkt 50a mit entsprechender Stellung des BKV-Stößels 12 in der Fig. 3. Die Flanschbuchse 6a des Wegsimulators ist auf Anschlag 20, das Rastelement 7 ist eingerastet, Schalter 18 liefert das Signal "Ein". Bei Ausfall des BKV entsteht kein Leerweg, es steht praktisch der volle Pedalhub zur Verfügung.

Die Fig. 4a zeigt die Kolben beziehungsweise die BKV-Stößel-Position. Im Grenzfall beträgt der Kolbenweg nur ca. 6 - 8 mm für z. B. ein Druckniveau von 10 bar. Hier ist das Rastelement entrastet und das Koppelglied 2 fast am Anschlag des Pedalstößels. Mit einer starken Feder 3 kann die Kolbenbewegung entsprechend der Druckmodulation auf das Pedal übertragen werden. Bei Ausfall des BKVs in dieser Position wird die Pedalkraft unmittelbar auf den BKV-Stößel 12 übertragen. Allerdings steht nicht der volle Pedalhub zur Verfügung, der jedoch abhängig ist von der Aussteuerung des Wegsimulators. Selbst im schlechtesten Fall (worst case), d. h. volle Aussteuerung des Wegsimulators steht für eine Bremsung auf Eis genügend Druck zur Verfügung.

Das vorliegende Konzept erfüllt alle funktionalen Forderungen bei hoher Fehlersicherheit und / oder Backup-Funktionen für Ausfälle. Darüber hinaus ist durch schnelle und variable Druckänderungsgeschwindigkeiten ein hohes Potenzial zur Bremswegverkürzung vorhanden.

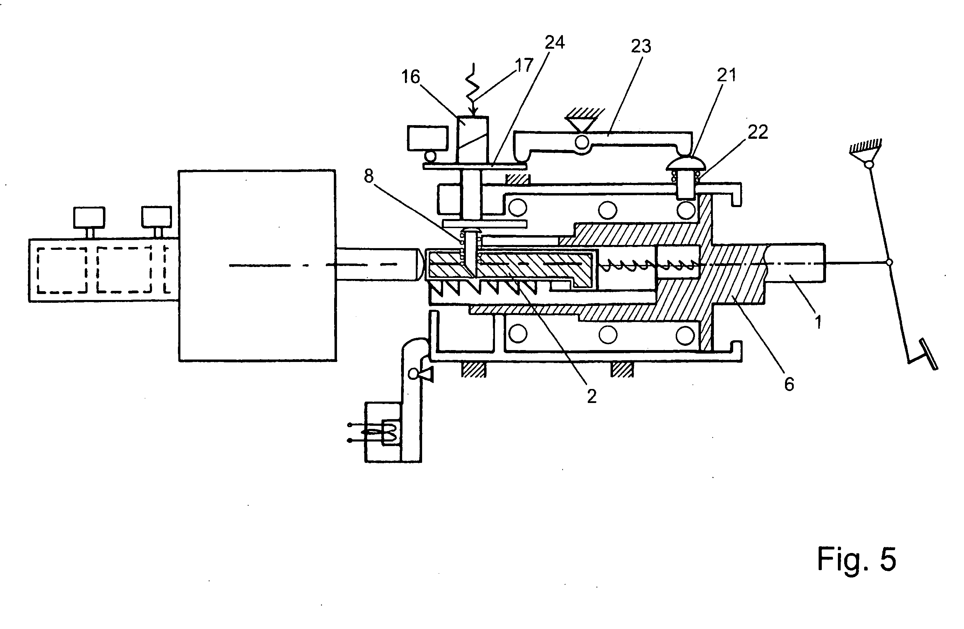

Die Figur 5 zeigt eine Erweiterung für den vorgenannten Extremfall des Doppelfehlers. Das System auf der Basis von Fig. 1 wird in einer Teilbremsstellung gezeigt bei der bereits z.B. auf Eis bei kleinen Drücken die ABS Funktion einsetzt. Wie in Fig. 1 und 4a beschreiben wird über den Hubmagneten 16 entrastet, sodass das Koppelelement 2 frei beweglich ist. Der entsprechende Hub des Hubmagneten 16 wird über einen Mitnehmer 24 auf einen Umlenkhebel 23 übertragen der einen Rastbolzen 21 einrückt der die Bewegung des Pedalstößels 1 mit Flansch 6 blockiert. Damit wird verhindert, dass der Wegsimulator zu stark ausgesteuert wird, was im Fehlerfall bei BKV-Ausfall einen Verlust an Kolbenweg bedeuten würde. Ist die ABS-Funktion beendet, so führt die starke Rückstellfeder 17 des Hubmagneten 16 zur Einrastung und die Rückstellfeder 22 bringt den Rastbolzen 21 in die Ausgangsstellung, sodass die Bewegung des Pedalstößels 1 und damit die Wegsimulatorfunktion frei ist. Bei dieser Funktion ist es vorteilhaft die Stellung von Pedalstößel und Kolben bzw. BKV-Stößel auszuwerten. Erst bei kleinem Abstand ist eine Entrastung zweckmäßig.

### Bezugszeichen:

- 1: Pedalstößel
- 1a: Pedal
- 2: Koppelement
- 3: Rückstellfeder
- 4: Wegsimulatorgehäuse
- 4a: Stellung Simulatorgehäuse bei Ausfall BKV
- 5: Wegsimulatorfeder
- 6: Flansch
- 6a: Flanschbuchse
- 7: Rastungselement
- 8: Rückstellfeder
- 9: Wippe
- 10: Rastung
- 11: Lagerung
- 11b: Anschlag
- 11a: Lagerung
- 12: BKV-Stößel
- 12a: Stellung BKV-Stößel bei Ausfall BKV
- 13: BKV
- 14: Tandemhauptzylinder
- 15: Wegsimulatorarretiermagnet
- 15a: Stellung Ankerhebel bei Ausfall BKV
- 16: Hubmagnet
- 17: Magnetrückstellfeder
- 18: Schalter
- 19: Kontaktierung
- 19a: Kontaktierung
- 19b: Kontaktierung
- 20: Anschlag Wegsimulator
- 21: Rastbolzen
- 22: Rückstellfeder
- 23: Umlenkhebel
- 24: Mitnehmer
- 46: Pedalkraft-Weg-Kurve
- 47: Bremsdruck-Weg-Kurve
- 48: Blockierdruck auf trockener Straße
- 48a: Pedalkraft auf trockener Straße
- 49: Blockierdruck bei Ausfall BKV
- 49a: Pedalkraft bei Ausfall BKV
- 50: max. Druck bei hohen Pedalkräften Ausfall BKV
- 50a: Druckniveau

## Patentansprüche

1. Bremsanlage, eine Betätigungseinrichtung (1a), insbesondere ein Bremspedal, und eine Steuer- und Regeleinrichtung aufweisend, wobei die Steuer- und Regeleinrichtung anhand der Bewegung und/oder Position der Betätigungseinrichtung eine Antriebsvorrichtung steuert, wobei die Antriebsvorrichtung zumindest einen Kolben eines Kolben-Zylinder-Systems (13) verstellt, so dass sich im Arbeitsraum des Zylinders ein Druck einstellt, wobei der Arbeitsraum über mindestens eine Druckleitung mit mindestens einer Radbremse in Verbindung ist, wobei die Betätigungseinrichtung (1a) auf ein Pedalstößel (1) wirkt und dieses verstellt, und das Pedalstößel (1) mit einem Wegsimulator in Verbindung ist und über mindestens eine Feder (3) auf ein verschieblich gelagertes Koppelelement (2) wirkt, wobei das Pedalstößel (1) und das Koppelelement (2) mittels einer Festsetzeinrichtung zueinander arretierbar sind, **dadurch gekennzeichnet, dass** das Koppelelement (2) mittels der Festsetzeinrichtung wahlweise in beliebigen Stellungen oder in mindestens zwei verschiedenen Stellungen relativ zum Pedalstößel (1) am selbigen arretierbar bzw. festsetzbar und/oder freigebbar bzw. freischaltbar ist.

2. Bremsanlage nach Anspruch 1, **dadurch gekennzeichnet, dass** die Festsetzeinrichtung (16, 17, 7, 10) ein Rastelement (7), insbesondere in Form einer Klinke hat, das in oder an dem Koppelement (2) beweglich gelagert ist, insbesondere verschiebbar gelagert ist, und dass das Rastelement (7) mit mehreren Hinterschnitten, insbesondere in Form einer, insbesondere sägezahnförmigen, Verzahnung (10) des ersten Pedalstößels (1) zusammenwirkt.

3. Bremsanlage nach Anspruch 1, **dadurch gekennzeichnet , dass** die Festsetzeinrichtung ein Andruckteil, insbesondere in Form eines Keils oder einer Reibfläche aufweist, das in oder an dem Koppelement beweglich gelagert ist, insbesondere verschiebbar gelagert ist, und dass das Andruckteil mit einer Andruckfläche des Pedalstößels zusammenwirkt, derart, dass über das Andruckteil das Koppelelement und das Pedalstößel kraftschlüssig zueinander festsetzbar sind.

4. Bremsanlage nach einem der Ansprüche 1 bis 3, **dadurch gekennzeichnet, dass** das Pedalstößel (1) ein Teil eines Wegsimulators ist.

5. Bremsanlage nach Anspruch 4, **dadurch gekennzeichnet , dass** das Pedalstößel (1) in dem Wegsimulatorgehäuse (4) einliegt, und sich zumindest eine Druckfeder (5) mit ihrem einen Ende an dem Pedalstößel (1), insbesondere an einem daran angeformten Kragen (6) und mit ihrem anderen Ende an dem Boden (20) des Wegsimulatorgehäuses abstützt.

6. Bremsanlage nach Anspruch 5, **dadurch gekennzeichnet, dass** das Pedalstößel (1) als Kolben ausgebildet und verschieblich in dem als Zylinder ausgebildeten Wegsimulatorgehäuse (4) gelagert ist.

7. Bremsanlage nach Anspruch einem der Ansprüche 2 bis 6, **dadurch gekennzeichnet, dass** das Koppelelement (2) zumindest bereichsweise im Wegsimulatorgehäuse (4) und/oder zumindest bereichsweise verschieblich in einer stirnseitigen Öffnung des als Kolben (1) ausgebildeten Pedalstößels (1), insbesondere axial oder koaxial zum Bremskraftverstärker-Stößel (12), angeordnet ist.

8. Bremsanlage nach Anspruch 7, **dadurch gekennzeichnet, dass** das Koppelelement (2) ein bolzenförmiges Profilteil oder ein plattenförmiges Teil ist.

9. Bremsanlage nach einem der Ansprüche 2 bis 8, **dadurch gekennzeichnet, dass** das Rastelement (7) von einer Rastelement-Rückstellfeder (8) in Richtung der entrasteten Position druckbeaufschlagt ist, wobei sich die Druckfeder (8) mit ihrem einen Ende auf dem Koppelelement (2) und mit ihrem anderen Ende an dem Rastelement (7) abstützt.

10. Bremsanlage nach einem der Ansprüche 2 bis 9, **dadurch gekennzeichnet, dass** die Feststelleinrichtung eine in Bewegungsrichtung des Rastelements (7) verschieblich gelagertes Widerlagerteil (9), insbesondere in Form einer Wippe oder Platte aufweist, und das Rastelement (7) gegen das Widerlagerteil (9) druckbeaufschlagt ist und an diesem entlang gleiten kann.

11. Bremsanlage nach Anspruch 10, **dadurch gekennzeichnet, dass** das Lager des Widerlagerteils am Wegsimulatorgehäuse (4) oder ortsfest zum Kolben-Zylinder-System angeordnet ist.

12. Bremsanlage nach Anspruch 10 oder 11, **dadurch gekennzeichnet, dass** mindestens eine Widerlagerfeder (17), insbesondere Druckfeder das Widerlagerteil (9) in Richtung Rastelement (7) druckbeaufschlagt.

13. Bremsanlage nach Anspruch 11 oder 12, **dadurch gekennzeichnet, dass** ein am Wegsimulatorgehäuse oder ortsfest zum Kolben-Zylinder-System angeordnete Antriebseinrichtung, insbesondere in Form eines Elektromagneten (16), einer Führungsfläche oder eines elektrohydraulischen Antriebes, das Rastelement (7) in die Raststellung und/oder aus dieser heraus verstellt.

14. Bremsanlage nach einem der Ansprüche 11 bis 13, **dadurch gekennzeichnet, dass** mindestens eine Führungsfläche im Zusammenspiel mit dem sich bewegenden Wegsimulatorgehäuse (4) das Widerlagerteil verstellt.

15. Bremsanlage nach Anspruch 13 oder 14, **dadurch gekennzeichnet , dass** die Antriebseinrichtung (16) oder die Führungsfläche das Widerlagerteil (9) nur in eine Richtung verstellt und die Bewegung des Rastelements (7) und/oder des Widerlagerteils (9) in die andere Richtung aufgrund einer Federkraft erfolgt.

16. Bremsanlage nach einem der vorhergehenden Ansprüche 9 bis 15, **dadurch gekennzeichnet, dass** die Federkräfte der Rastelement-Rückstellfeder (8) und der Widerlagerfeder (17) derart ausgelegt sind, dass bei nicht aktivierter Antriebseinrichtung (16) das Rastelement (7) in die verrastende Stellung druckbeaufschlagt wird.

17. Bremsanlage nach einem der vorhergehenden Ansprüche 2 bis 16, **dadurch gekennzeichnet, dass** die Verzahnung (10) des Pedalstößels (1) sägezahnförmig ausgebildet ist, wobei die senkrechten Flanken der Verzahnung in Richtung des Kolben-Zylinder-Systems weisen und bei der Bewegung des ersten Wegsimulatorteils weg vom Kolben-Zylinder-System das Rastteil aufgrund der schrägen Zahnflanken aus einer verrasteten Position in eine nächste Rastposition verstellt werden kann.

18. Bremsanlage nach einem der vorhergehenden Ansprüche 2 bis 17, **dadurch gekennzeichnet, dass** eine Koppelelement-Druckfeder (3) sich mit ihrem einen Ende am Pedalstößel (1) und mit ihrem anderen Ende am Koppelelement (2) abstützt und dieses in Richtung BKV-Stößel (12) druckbeaufschlagt.

19. Bremsanlage nach einem der vorhergehenden Ansprüche, **dadurch gekennzeichnet, dass** der Elektromagnet der Feststelleinrichtung ein Impulsmagnet mit reduziertem Haltestrom ist.

20. Bremsanlage nach einem der vorhergehenden Ansprüche, **dadurch gekennzeichnet , dass** ein Sensor, insbesondere Schalter (18) die Stellung des Rastelements (7) oder die Stellung des Widerlagerteils (9) ermittelt.

21. Bremsanlage nach einem der vorhergehenden Ansprüche, **dadurch gekennzeichnet, dass** die Festsetzeinrichtung (16, 17, 7, 10) ein Anschlagelement, insbesondere in Form eines Rastbolzens (21) verstellt, welcher den Hub des Pedalstößels (1) relativ zum Wegsimulatorgehäuse (4) begrenzt.

22. Bremsanlage nach Anspruch 21, **dadurch gekennzeichnet, dass** der Rastbolzen (21) durch Bewegung des Widerlagerteils (9) in die entrastende Stellung über ein Getriebe, insbesondere eine Wippe (23) in die Bewegungsbahn des Pedalstößels (1) innerhalb des Zylinders des Wegsimulatorgehäuses (4) verstellbar ist, derart, dass die Bewegung des Pedalstößels (1) relativ zum Wegsimulatorgehäuse (4) blockiert ist.

23. Bremsanlage nach einem der vorhergehenden Ansprüche, **dadurch gekennzeichnet, dass** eine Arretierungseinrichtung (15, 15a) das verschieblich gelagerte Wegsimulatorgehäuse (4) in einer Normalstellung arretiert, wobei in einem Störfall die Arretierung freigebbar ist und das Wegsimulatorgehäuse (4) in Richtung des BKV mittels der Betätigungseinrichtung (1a) verschiebbar ist.

24. Bremsanlage nach einem der vorhergehenden Ansprüche, **dadurch gekennzeichnet , dass** die Antriebsvorrichtung eine elektromotorische getriebene Antriebsvorrichtung ist.

## Claims

1. Brake system comprising an actuation device (1a), in particular a brake pedal, and a control and regulating device, wherein the control and regulating device controls a drive device on the basis of the movement and/or position of the actuation device, wherein the drive device moves at least one piston of a piston/cylinder system (13) so that a pressure is set in the working chamber of the cylinder, wherein the working chamber is connected to at least one wheel brake via at least one pressure line, wherein the actuation device (1a) acts on a pedal plunger (1) and moves the latter, and the pedal plunger (1) is connected to a travel simulator and acts on a displaceably mounted coupling element (2) via at least one spring (3), wherein the pedal plunger (1) and the coupling element (2) can be immobilised relative to one another by means of a fixing device, **characterised in that** the coupling element (2) can selectively be immobilised or fixed to and/or released or disconnected from the pedal plunger (1) in any desired positions or in at least two different positions relative thereto by means of the fixing device.

2. Brake system according to claim 1, **characterised in that** the fixing device (16, 17, 7, 10) has a latching element (7), in particular in the form of a pawl, which is movably mounted, in particular displaceably mounted, in or on the coupling element (2), and **in that** the latching element (7) cooperates with a plurality of undercuts, in particular in the form of a toothing (10) of the first pedal plunger (1), said toothing being in particular in the form of sawteeth.

3. Brake system according to claim 1, **characterised in that** the fixing device has a pressure part, in particular in the form of a wedge or friction surface, which is movably mounted, in particular displaceably mounted, in or on the coupling element, and **in that** the pressure part cooperates with a pressure surface of the pedal plunger in such a way that the coupling element and the pedal plunger are fixed relative to one another with a force fit via the pressure part.

4. Brake system according to one of claims 1 to 3, **characterised in that** the pedal plunger (1) forms part of a travel simulator.

5. Brake system according to claim 4, **characterised in that** the pedal plunger (1) is located in the travel simulator housing (4) and at least one compression spring (5) is supported by one of its ends against the pedal plunger (1), in particular against a collar (6) integrally formed thereon, and by its other end against the bottom (20) of the travel simulator housing.

6. Brake system according to claim 5, **characterised in that** the pedal plunger (1) is designed as a piston and is displaceably mounted in the travel simulator housing (4) designed as a cylinder.

7. Brake system according to one of claims 2 to 6, **characterised in that** the coupling element (2) is arranged at least partially in the travel simulator housing (4) and/or at least partially displaceably in an end opening of the pedal plunger (1) designed as a piston (1), in particular axially or coaxially relative to the brake booster plunger (12).

8. Brake system according to claim 7, **characterised in that** the coupling element (2) is a bolt-shaped profiled part or a plate-shaped part.

9. Brake system according to one of claims 2 to 8, **characterised in that** the latching element (7) is biased in the direction of the unlatched position by a latching element return spring (8), the compression spring (8) being supported by one of its ends against the coupling element (2) and by its other end against the latching element (7).

10. Brake system according to one of claims 2 to 9, **characterised in that** the fixing device has an abutment part (9), in particular in the form of a rocker or plate, which is mounted so as to be displaceable in the movement direction of the latching element (7), and the latching element (7) is biased towards the abutment part (9) and can slide along the latter.

11. Brake system according to claim 10, **characterised in that** the bearing of the abutment part is arranged on the travel simulator housing (4) or in a stationary manner relative to the piston/cylinder system.

12. Brake system according to claim 10 or 11, **characterised in that** at least one abutment spring (17), in particular a compression spring, biases the abutment part (9) in the direction of the latching element (7).

13. Brake system according to claim 11 or 12, **characterised in that** a drive device, in particular in the form of an electromagnet (16), a guide surface or an electrohydraulic drive, which is arranged on the travel simulator housing or in a stationary manner relative to the piston/cylinder system, moves the latching element (7) into the latching position and/or out of said position.

14. Brake system according to one of claims 11 to 13, **characterised in that** at least one guide surface in collaboration with the moving travel simulator housing (4) moves the abutment part.

15. Brake system according to claim 13 or 14, **characterised in that** the drive device (16) or the guide surface moves the abutment part (9) only in one direction, and the movement of the latching element (7) and/or of the abutment part (9) in the other direction takes place by virtue of a spring force.

16. Brake system according to one of the preceding claims 9 to 15, **characterised in that** the spring forces of the latching element return spring (8) and of the abutment spring (17) are configured in such a way that the latching element (7) is biased into the latching position when the drive device (16) is not activated.

17. Brake system according to one of the preceding claims 2 to 16, **characterised in that** the toothing (10) of the pedal plunger (1) is in the form of sawteeth, wherein the vertical flanks of the toothing point in the direction of the piston/cylinder system and, during the movement of the first travel simulator part away from the piston/cylinder system, the latching part can be moved from one latched position into a next latching position by virtue of the oblique tooth flanks.

18. Brake system according to one of the preceding claims 2 to 17, **characterised in that** a coupling element compression spring (3) is supported by one of its ends against the pedal plunger (1) and by its other end against the coupling element (2) and biases the latter in the direction of the brake booster plunger (12).

19. Brake system according to one of the preceding claims, **characterised in that** the electromagnet of the fixing device is a pulse magnet with reduced holding current.

20. Brake system according to one of the preceding claims, **characterised in that** a sensor, in particular a switch (18), determines the position of the latching element (7) or the position of the abutment part (9).

21. Brake system according to one of the preceding claims, **characterised in that** the fixing device (16, 17, 7, 10) moves a stop element, in particular in the form of a latching bolt (21), which limits the stroke of the pedal plunger (1) relative to the travel simulator housing (4).

22. Brake system according to claim 21, **characterised in that**, by moving the abutment part (9) into the unlatching position via a gear mechanism, in particular a rocker (23), the latching bolt (21) can be moved into the movement path of the pedal plunger (1) within the cylinder of the travel simulator housing (4) in such a way that the movement of the pedal plunger (1) relative to the travel simulator housing (4) is blocked.

23. Brake system according to one of the preceding claims, **characterised in that** an immobilising device (15, 15a) immobilises the displaceably mounted travel simulator housing (4) in a normal position, wherein, in the event of a malfunction, the immobilisation can be released and the travel simulator housing (4) can be displaced in the direction of the brake booster by means of the actuation device (1a).

24. Brake system according to one of the preceding claims, **characterised in that** the drive device is a drive device driven by an electric motor.

## Revendications

1. Installation de freinage présentant un dispositif d'actionnement (1a), notamment une pédale de frein, et un dispositif de commande et de régulation,
installation dans laquelle
le dispositif de commande et de régulation, au regard du mouvement et/ou de la position du dispositif d'actionnement, commande un dispositif d'entraînement, le dispositif d'entraînement déplace au moins un piston d'un système piston et cylindre (13), de façon qu'il s'établisse une pression dans la chambre de travail du cylindre,
la chambre de travail est en communication, par l'intermédiaire d'au moins une conduite de pression, avec au moins un frein de roue,
le dispositif d'actionnement (1a) agit sur un poussoir de pédale (1) et déplace celui-ci, et le poussoir de pédale (1) est en liaison avec un simulateur de course de déplacement et agit, par l'intermédiaire d'au moins un ressort (3), sur un élément de couplage (2) monté de manière coulissante,
le poussoir de pédale (1) et l'élément de couplage (2) peuvent être bloqués l'un par rapport à l'autre au moyen d'un dispositif d'immobilisation,
**caractérisée en ce que** l'élément de couplage (2) peut, au moyen du dispositif d'immobilisation, être sélectivement bloqué ou immobilisé sur le poussoir de pédale (1) dans différentes positions ou dans au moins deux positions différentes par rapport à celui-ci, et/ou être débloqué ou dégagé de celui-ci.

2. Installation de freinage selon la revendication 1, **caractérisée en ce que** le dispositif d'immobilisation (16, 17, 7, 10) possède un élément d'encliquetage (7), notamment sous la forme d'un cliquet, qui est monté mobile, notamment monté coulissant, dans ou sur l'élément de couplage (2), et **en ce que** l'élément d'encliquetage (7) interagit avec plusieurs contre-dépouilles, notamment sous la forme d'une denture (10), en particulier en dents de scie, du premier poussoir de pédale (1).

3. Installation de freinage selon la revendication 1, **caractérisée en ce que** le dispositif d'immobilisation comprend une pièce d'appui, notamment sous la forme d'un coin ou d'une surface de friction, qui est monté mobile dans ou sur l'élément de couplage, notamment monté de manière coulissante, et **en ce que** la pièce d'appui interagit avec une surface d'appui du poussoir de pédale, de façon telle que, par l'intermédiaire de la pièce d'appui, l'élément de couplage et le poussoir de pédale puissent être immobilisés l'un par rapport à l'autre par adhérence.

4. Installation de freinage selon l'une des revendications 1 à 3, **caractérisée en ce que** le poussoir de pédale (1) est une partie d'un simulateur de course de déplacement.

5. Installation de freinage selon la revendication 4, **caractérisée en ce que** le poussoir de pédale (1) est logé dans le carter de simulateur de course de déplacement (4), et au moins un ressort de compression (5) s'appuie, avec une de ses extrémités, contre le poussoir de pédale (1), notamment contre une collerette (6) qui est y formée, et avec son autre extrémité, contre le fond (20) du carter de simulateur de course de déplacement.

6. Installation de freinage selon la revendication 5, **caractérisée en ce que** le poussoir de pédale (1) est réalisé sous la forme d'un piston et est monté coulissant dans le carter de simulateur de course de déplacement (4) réalisé en tant que cylindre.

7. Installation de freinage selon l'une des revendications 2 à 6, **caractérisée en ce que** l'élément de couplage (2) est agencé au moins en partie dans le carter de simulateur de course de déplacement (4) et/ou au moins par endroits de manière coulissante dans une ouverture frontale du poussoir de pédale (1) réalisé sous forme de piston (1), notamment de manière axiale ou coaxiale relativement au poussoir (12) du module d'assistance de freinage.

8. Installation de freinage selon la revendication 7, **caractérisée en ce que** l'élément de couplage (2) est une pièce profilée en forme de broche, ou une pièce en forme de plaque.

9. Installation de freinage selon l'une des revendications 2 à 8, **caractérisée en ce que** l'élément d'encliquetage (7) est sollicité en poussée en direction de la position non encliquetée, par un ressort de rappel d'élément d'encliquetage (8), le ressort de compression (8) s'appuyant, avec l'une de ses extrémités, sur l'élément de couplage (2), et, avec son autre extrémité, sur l'élément d'encliquetage (7).

10. Installation de freinage selon l'une des revendications 2 à 9, **caractérisée en ce que** le dispositif d'immobilisation présente une pièce de butée (9) montée coulissante dans la direction de mouvement de l'élément d'encliquetage (7) et se présentant notamment sous la forme d'un élément basculant ou d'une plaque, et l'élément d'encliquetage (7) est sollicité en poussée contre la pièce de butée (9) et peut glisser le long de celle-ci.

11. Installation de freinage selon la revendication 10, **caractérisée en ce que** le palier de montage de la pièce de butée est agencé sur le carter de simulateur de course de déplacement (4) ou en position fixe par rapport au système piston et cylindre.

12. Installation de freinage selon la revendication 10 ou la revendication 11, **caractérisée en ce qu'**au moins un ressort de butée (17), notamment un ressort de compression, sollicite en poussée la pièce de butée (9) en direction de l'élément d'encliquetage (7).

13. Installation de freinage selon la revendication 11 ou la revendication 12, **caractérisée en ce qu'**un dispositif d'entraînement agencé sur le carter de simulateur de course de déplacement ou en position fixe par rapport au système piston et cylindre, et se présentant notamment sous la forme d'un électroaimant (16), d'une surface de guidage ou d'un entraînement électro-hydraulique, déplace l'élément d'encliquetage (7) dans la position encliquetée et/ou hors de celle-ci.

14. Installation de freinage selon l'une des revendications 11 à 13, **caractérisée en ce qu'**au moins une surface de guidage, en coopérant avec le carter de simulateur de course de déplacement (4) en mouvement, déplace la pièce de butée.

15. Installation de freinage selon la revendication 13 ou la revendication 14, **caractérisée en ce que** le dispositif d'entraînement (16) ou la surface de guidage ne déplace la pièce de butée (9) que dans une direction, et le mouvement de l'élément d'encliquetage (7) et/ou de la pièce de butée (9) dans l'autre direction s'effectue en raison d'une force de ressort.

16. Installation de freinage selon l'une des revendications précédentes 9 à 15, **caractérisée en ce que** les forces de ressort du ressort de rappel d'élément d'encliquetage (8) et du ressort de butée (17) sont dimensionnées de façon telle, que pour un dispositif d'entraînement (16) non activé, l'élément d'encliquetage (7) soit sollicité en poussée dans la position d'encliquetage.

17. Installation de freinage selon l'une des revendications précédentes 2 à 16, **caractérisée en ce que** la denture (10) du poussoir de pédale (1) présente une configuration en forme de dents de scie, les flancs perpendiculaires à l'axe ou verticaux de la denture étant dirigés vers le système à piston et cylindre, et lors du mouvement de la première partie de simulateur de course de déplacement dans le sens d'un éloignement du système à piston et cylindre, la pièce d'encliquetage peut, en raison des flancs de dent inclinés, être déplacée d'une position encliquetée dans une position d'encliquetage suivante.

18. Installation de freinage selon l'une des revendications précédentes 2 à 17, **caractérisée en ce qu'**un ressort de compression d'élément de couplage (3) s'appuie, avec une de ses extrémités, contre le poussoir de pédale (1), et avec son autre extrémité, contre l'élément de couplage (2) en sollicitant celui-ci en poussée en direction du poussoir (12) du module d'assistance de freinage.

19. Installation de freinage selon l'une des revendications précédentes, **caractérisée en ce que** l'électroaimant du dispositif d'immobilisation, est un aimant à impulsions à courant de maintien réduit.

20. Installation de freinage selon l'une des revendications précédentes, **caractérisée en ce qu'**un détecteur, notamment un commutateur (18), détermine la position de l'élément d'encliquetage (7) ou la position de la pièce de butée (9).

21. Installation de freinage selon l'une des revendications précédentes, **caractérisée en ce que** le dispositif d'immobilisation (16, 17, 7, 10) déplace un élément butoir, notamment sous la forme d'une broche d'encliquetage (21), qui limite la course de déplacement du poussoir de pédale (1) par rapport au carter de simulateur de course de déplacement (4).

22. Installation de freinage selon la revendication 21, **caractérisée en ce que** la broche d'encliquetage (21) peut, grâce au mouvement de déplacement de la pièce de butée (9) vers la position de non encliquetage, par l'intermédiaire d'une transmission, notamment d'un élément basculant (23), être déplacée dans la trajectoire de déplacement du poussoir de pédale (1) à l'intérieur du cylindre du carter de simulateur de course de déplacement (4), de façon à bloquer le mouvement du poussoir de pédale (1) par rapport au carter de simulateur de course de déplacement (4).

23. Installation de freinage selon l'une des revendications précédentes, **caractérisée en ce qu'**un dispositif d'arrêt (15, 15a) bloque le carter de simulateur de course de déplacement (4) monté coulissant, dans une position normale, et, en cas de défaillance, le blocage d'arrêt peut être interrompu et le carter de simulateur de course de déplacement (4) peut être déplacé en direction du module d'assistance de freinage au moyen du dispositif d'actionnement (1a).

24. Installation de freinage selon l'une des revendications précédentes, **caractérisée en ce que** le dispositif d'entraînement est un dispositif d'entraînement mu par moteur électrique.
